# EUROPÄISCHE PATENTSCHRIFT

(11) **EP 0 815 293 B1**
(45) Veröffentlichungstag und Bekanntmachung des Hinweises auf die Patenterteilung: **06.05.1999**
(21) Anmeldenummer: 96905827.0
(22) Anmeldetag: 29.02.1996
(51) Int. Cl.: C25D 11/18

(54) **CHROMFREIES VERFAHREN ZUR VERBESSERUNG DER LACKHAFTUNG NACH DÜNNSCHICHT-ANODISIERUNG**
CHROMIUM-FREE PROCESS FOR IMPROVING THE ADHERENCE OF PAINT APPLIED BY THIN-FILM ANODIC OXIDATION
PROCEDE SANS CHROME PERMETTANT D'AMELIORER L'ADHERENCE D'UNE PEINTURE OU D'UN VERNIS APPLIQUE(E) PAR ANODISATION EN COUCHE MINCE

(30) Priorität: 08.03.1995 DE 19508126
(43) Veröffentlichungstag der Anmeldung: 07.01.1998
(73) Patentinhaber: Henkel Kommanditgesellschaft auf Aktien, 40191 Düsseldorf (DE)
(72) Erfinder: ROLAND, Wolf-Achim, 42697 Solingen (DE); NOWAK, Andreas, 50859 Köln (DE)
(86) Internationale Anmeldenummer: EP9600829
(87) Internationale Veröffentlichungsnummer: WO9627698

(56) Entgegenhaltungen:
- EP-A- 0 008 942
- EP-A- 0 177 805
- EP-A- 0 319 017
- WO-A-85/05131
- WO-A-92/18661
- US-A- 4 136 073
- US-A- 5 158 622
- DATABASE WPI Section Ch, Week 9110 Derwent Publications Ltd., London, GB; Class M11, AN 91-070643 XP002015514 & JP,A,03 020 496 (NIPPON ALUM KOGYO K) , 29.Januar 1991

## Beschreibung

Die Erfindung betrifft die Verwendung einer wäßrigen Lösung, mit der die Haftung von Lacken, insbesondere von Pulverlacken, auf Metalloberflächen, die zur Verbesserung der Korrosionsbeständigkeit einer Dünnschicht-Anodisierung unterzogen wurden, erhöht wird. Die Verfahrensabfolge Dünnschicht-Anodisierung - Nachbehandlung zur Verbesserung der Lackhaftung - Pulverlackierung ist besonders geeignet, die sogenannte Filiform-Korrosion zu unterdrücken.

Unter Filiform-Korrosion wird das Wachstum fadenförmiger Korrosionsspuren unter einer Lackschicht verstanden, das unter bestimmten Bedingungen von Feuchtigkeits- und Elektrolytgehalt der Atmosphäre auftreten kann. Dieser Korrosionsform unterliegen vornehmlich lakkierte Architekturbauteile aus Aluminium in Küstengegenden. Eine Diskussion von Ursachen, Ausprägungsformen und Mechanismen dieser Korrosionsform ist zum Beispiel zu finden in: G. Steele, "Filiform corrosion on architectural aluminium - a review", Polymers Paint Colour J., 184 (4345), SS. 90 - 95 (März 1994). Durch eine Chromatierung vor der Lackierung läßt sich diese Korrosionsform zwar eindämmen, jedoch nicht sicher verhindern. Eine wirksame Vorbehandlungs-Alternative zur Chromatierung stellt die sogenannte Dünnschicht-Anodisierung dar, die sich zwar als gut wirksam gegen Filiform-Korrosion erwies, häufig jedoch mit dem Problem einer schlechten Lackhaftung verbunden ist.

Die kurz als "Anodisierung" bezeichnete elektrochemische anodische Oxidation von Metallen in geeigneten Elektrolyten ist ein weit verbreiteter Prozeß zur Ausbildung von korrosionsschützenden und/oder dekorativen Überzügen auf hierfür geeigneten Metallen. Diese Verfahren sind beispielsweise in Ullmann's Encyclopedia of Industrial Chemistry, 5th Edition, Vol. 9 (1987), S. 174 - 176 kurz charakterisiert. Demnach sind Titan, Magnesium und Aluminium sowie deren Legierungen anodisierbar, wobei die Anodisierung von Aluminium und dessen Legierungen technisch die größte Bedeutung hat. Die elektrolytisch erzeugten Anodisierschichten schützen die Aluminiumoberflächen vor den Einflüssen der Witterung und anderer korrodierender Medien. Ferner werden Anodisierschichten aufgebracht, um eine härtere Oberfläche zu erhalten und damit eine erhöhte Verschleißfestigkeit des Aluminiums zu erreichen. Durch die Eigenfarbe der Anodisierschichten bzw. durch adsorptive bzw. elektrolytische Einfärbung lassen sich besondere dekorative Effekte erzielen. Die Anodisierung des Aluminiums erfolgt in einem sauren Elektrolyten, wobei Schwefelsäure am weitesten verbreitet ist. Weitere geeignete Elektrolyte sind Phosphorsäure, Oxalsäure und Chromsäure. Die Eigenschaften der Anodisierschichten lassen sich durch die Wahl des Elektrolyten, dessen Temperatur sowie die Stromdichte und die Anodisierdauer in weiten Grenzen variieren. Üblicherweise erfolgt die Anodisierung mit Gleichstrom oder mit einem Wechselstrom-überlagerten Gleichstrom.

Architekturbauteile werden üblicherweise bis zu einer Schichtdicke von etwa 20 Mikrometer anodisiert, wozu Anodisierzeiten in der Größenordnung 30 bis über 60 Minuten erforderlich sind. Solche Anodisierschichten werden in der Regel nicht überlackiert, sondern in der Eigenfarbe belassen oder adsorptiv oder elektrolytisch nachgefärbt und anschließend verdichtet. Sie erfüllen dann gleichzeitig die Aufgaben des Korrosionsschutzes und der ästhetischen Wirkung.

Durch eine Dünnschicht-Anodisierung lassen sich dünnere Anodisierschichten, beispielsweise mit Schichtdicken im Bereich zwischen etwa 2 und maximal 10 Mikrometer, erzeugen, die erst in Verbindung mit einer nachfolgenden Lackierung einen ausreichenden Korrosionsschutz bewirken. Für eine solche Dünnschicht-Anodisierung, die gelegentlich auch als Voranodisierung bezeichnet wird, lassen sich prinzipiell die gleichen Elektrolyten wie für eine konventionelle Anodisierung verwenden. Die dünnen Anodisierschichten werden dadurch erhalten, daß man mit verminderten Stromstärken und/oder verringerten Anodisierzeiten arbeitet. So werden beispielsweise nach dem Gleichstrom-Schwefelsäure-Verfahren (GS-Verfahren) Anodisierschichten mit einer Dicke von etwa 5 Mikrometer erhalten, wenn man Aluminiumbleche in einem Elektrolyten mit 180 g/l Schwefelsäure und 5 g/l Aluminiumionen bei 25 °C mit einer Stromstärke von 2 A/dm² für eine Zeitdauer von 5 Minuten anodisiert. Als Vorbehandlung zur Vermeidung von Filiform-Korrosion stellt eine derartige Dünnschicht-Anodisierung eine attraktive Alternative zu einer Chromatierung dar, sofern das Problem der Lackhaftung zufriedenstellend gelöst werden kann. Beispielsweise kann man bei höheren Elektrolyttemperaturen als bei der klassischen Anodisierung arbeiten, um hierdurch größere Poren in der Anodisierschicht zur Erhöhung der Lackhaftung zu erzielen. Diese Maßnahme erwies sich jedoch in der Vergangenheit als nicht ausreichend, um bei einer Vielzahl von Lacksystemen eine stets gleichbleibend gute Lackhaftung zu bewirken. Durch eine chemische Nachbehandlung der Anodisierschicht vor der Lackierung, die den Gegenstand der vorliegenden Erfindung darstellt, läßt sich eine weitere Verbesserung der Lackhaftung bewirken.

Im Stand der Technik sind Konversionsverfahren zur Behandlung gereinigter, jedoch nicht anodisierter Aluminiumoberflächen zur Erzielung einer guten Lackhaftung bekannt, in denen organische Filmbildner wie beispielsweise Polyacrylate, in der Regel zusammen mit Fluorwasserstoffsäure und/oder Säuren komplexer Fluoride, eingesetzt werden. Beispielsweise seien genannt:

Die **US-A-5 129 967** und **US-A-4 921 552** offenbaren Behandlungsbäder für eine No-Rinse-Behandlung (dort als "dried in place conversion coating" bezeichnet) von Aluminium, enthaltend
a) 10 bis 16 g/l Polyacrylsäure oder deren Homopolymere,
b) 12 bis 19 g/l Hexafluorozirkonsäure,
c) 0,17 bis 0,3 g/l Fluorwasserstoffsäure und
d) bis zu 0,6 g/l Hexafluorotitansäure.

**EP-B-8 942** offenbart Behandlungslösungen, vorzugsweise für Aluminiumdosen, enthaltend
a) 0,5 bis 10 g/l Polyacrylsäure oder eines Esters davon und
b) 0,2 bis 8 g /l an mindestens einer der Verbindungen H₂ZrF₆, H₂TiF₆ und H₂SiF₆, wobei der pH-Wert der Lösung unterhalb von 3,5 liegt,
sowie ein wäßriges Konzentrat zum Wiederauffrischen der Behandlungslösung enthaltend
a) 25 bis 100 g/l Polyacrylsäure oder eines Esters davon,
b) 25 bis 100 g/l von mindestens einer der Verbindungen H₂ZrF₆, H₂TiF₆ und H₂SiF₆, und
c) einer Quelle freier Fluoridionen, die 17 bis 120 g/l freies Fluorid liefert.

**DE-C-24 33 704** beschreibt Behandlungsbäder zur Erhöhung der Lackhaftung und des permanenten Korrosionsschutzes auf u.a. Aluminium, die 0,1 bis 5 g/l Polyacrylsäure oder deren Salze oder Ester sowie 0,1 bis 3,5 g/l Ammoniumfluorozirkonat, berechnet als ZrO₂, enthalten können. Die pH-Werte dieser Bäder können über einen weiten Bereich schwanken. Die besten Ergebnisse werden im allgemeinen erhalten, wenn der pH bei 6 - 8 liegt.

**US-A-4 992 116** beschreibt Behandlungsbäder für die Konversionsbehandlung von Aluminium mit pH-Werten zwischen etwa 2,5 und 5, die mindestens drei Komponenten enthalten:
a) Phosphationen im Konzentrationsbereich zwischen 1,1x10⁻⁵ bis 5,3x10⁻³ mol/l entsprechend 1 bis 500 mg/l,
b) 1,1x10⁻⁵ bis 1,3x10⁻³ mol/l einer Fluorosäure eines Elements der Gruppe Zr, Ti, Hf und Si (entsprechend je nach Element 1,6 bis 380 mg/l) und
c) 0,26 bis 20 g/l einer Polyphenolverbindung, erhältlich durch Umsetzung von Poly(vinylphenol) mit Aldehyden und organischen Aminen.

**WO 92/07973** lehrt ein chromfreies Behandlungsverfahren für Aluminium, das als wesentliche Komponenten in saurer wäßriger Lösung 0,01 bis etwa 18 Gew.-% H₂ZrF₆ und 0,01 bis etwa 10 Gew.-% eines 3-(N-C₁₋₄alkyl-N-2-hydroxyethylaminomethyl)-4-hydroxystyrol-Polymers verwendet.

Die **DE-A-43 17 217** beschreibt ein Verfahren zur Vorbehandlung von Oberflächen aus Aluminium oder seinen Legierungen vor einer zweiten, permanent korrosionsschützenden Konversionsbehandlung, bei dem man die Oberflächen mit sauren wäßrigen Behandlungslösungen in Kontakt bringt, die komplexe Fluoride der Elemente Bor, Silicium, Titan, Zirkon oder Hafnium einzeln oder im Gemisch miteinander in Konzentrationen der Fluoro-Anionen von insgesamt zwischen 100 und 4000, vorzugsweise 200 bis 2000, mg/l enthalten und einen pH-Wert zwischen 0,3 und 3,5, vorzugsweise zwischen 1 und 3, aufweisen. Dabei können die Behandlungslösungen zusätzlich Polymere vom Typ der Polyacrylate und/oder der Umsetzungsprodukte von Poly(vinylphenol) mit Aldehyden und organischen Hydroxylgruppenhaltigen Aminen in Konzentrationen unter 500 mg/l, vorzugsweise unter 200 mg/l enthalten.

**US-A-4 136 073** beansprucht ein chromfreies Behandlungsverfahren für Aluminiumoberflächen, bei dem man die Oberflächen mit sauren (pH 1,2 bis 5,5) wäßrigen Lösungen in Berührung bringt, die einen organischen Filmbildner und eine lösliche Titanverbindung im Gewichtsverhältnis Polymer:Titan zwischen 100:1 und 1:10 enthalten. Die bevorzugte Titankonzentration beträgt zwischen 0,01 und 5 Gew.-%.

Den vorstehend aufgeführten Behandlungsverfahren ist gemeinsam, daß sie auf nichtanodisierten Aluminiumoberflächen angewandt werden. Die **US-A-5 226 976** beschreibt ein Nachbehandlungsverfahren für vorbehandelte Metalloberflächen, beispielsweise für anodisierte Aluminiumoberflächen, wonach die Anodisierschichten mit einer Lösung behandelt werden, die 25 bis 5 000 ppm eines Triazols sowie eine Poly(vinylphenol)-Verbindung enthalten, bei der zumindest ein Teil der Phenolringe einen Substituenten trägt, der durch eine der beiden Formeln darstellbar ist: 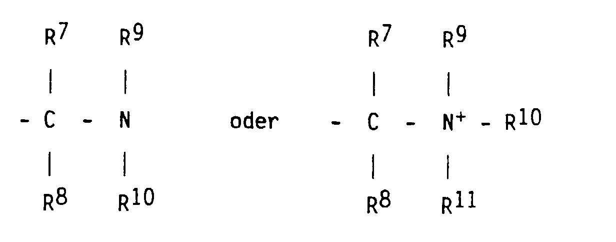 wobei jeder der Reste R⁷ bis R¹¹ ausgewählt ist aus Wasserstoff, einer Alkyl-, Aryl-, Hydroxyalkyl-, Mercaptoalkyl- oder Phosphonoalkylgruppe, wobei R¹¹ außerdem -0- oder -OH sein kann und wobei zumindest einer der Reste R⁹ und R¹⁰ eine Polyhydroxyalkylgruppe umfassen muß, die aus der Kondensation eines Amins oder von Ammoniak mit einer Ketose, einer Aldose oder einer anderen Polyhydroxyverbindung mit 3 bis 8 C-Atomen und nachfolgender Reduktion der Imino- zu einer Amino-Funktion hervorgeht.

Aus dem Zusammenhang dieser Offenbarung geht hervor, daß es sich hierbei um eine passivierende Nachspülung handelt, durch die die Korrosionsschutzwirkung der zuvor aufgebrachten Konversionsschicht, beispielsweise der Anodisierschicht, verbessert wird. Hierbei wird jedoch nicht gelehrt, dieses Verfahren nach einer Dünnschicht-Anodisierung einzusetzen, um die Haftung einer nachträglich aufgebrachten Lackierung zu verbessern.

Der Erfindung liegt die Aufgabe zugrunde, ein Verfahren zur Verfügung zu stellen, mit dem nach einer vorausgegangenen Dünnschicht-Anodisierung die Haftung einer anschließend aufgebrachten Lackierung, insbesondere einer Pulverlackierung, verbessert werden kann. Ein solches Verfahren hat insbesondere für den Schutz von Architekturbauteilen aus lackiertem Aluminium vor der eingangs beschriebenen Filiform-Korrosion Bedeutung.

Der Begriff der "Dünnschicht-Anodisierung" ist beispielsweise definiert in den Technischen Richtlinien der GSB International (Technische Richtlinien für die Arbeit der Gütegemeinschaft für die Stückbeschichtung von Bauteilen aus Aluminium e.V. (GSB International). Herausgeber: RAL Deutsches Institut für Gütesicherung und Kennzeichnung e.V., Bornheimer Str. 180, Bonn 1992; Teil 3, Güte- und Prüfbestimmungen, Seite 35B, Fassung März 1994). Demnach wird nach dem Gleichstrom-Schwefelsäure-Verfahren (GS-Verfahren) mit folgenden Badparametern anodisiert:

| | |
|---|---|
| Elektrolytkonzentration | 180 - 200 g/l H₂SO₄ |
| max. Al-Gehalt | 15 g/l |
| Chloridgehalt | <0,1 g/l |
| Temperatur | 25 - 30 °C |
| Stromdichte | 1,5 - 3 A/dm² |
| Schichtdicke | 3 - 8 µm. |

Diese Aufgabe wird gelöst durch die Verwendung einer wäßrigen Lösung zur Verbesserung der Lackhaftung nach einer Dünnschicht-Anodisierung, dadurch gekennzeichnet, daß man die anodisierten Metalloberflächen mit einer wäßrigen Lösung in Kontakt bringt, die eine oder mehrere der folgenden Komponenten enthält:
a) 200 bis 2000 ppm eines Homo- oder Copolymerisats von Acrylsäure und/oder Methacrylsäure und/oder jeweils deren Ester mit einer mittleren Molmasse im Bereich zwischen 20 000 und 150 000 und/oder
b) 200 bis 3000 ppm Hexafluorotitansäure und/oder Hexafluorozirkonsäure oder jeweils deren Anionen.

Wenn hierbei von anodisierten Metalloberflächen die Rede ist, so ist es selbstverständlich, daß es sich hierbei um die Oberflächen anodisierbarer Metalle wie Titan, Magnesium und Aluminium sowie deren Legierungen handelt. Das Verfahren ist insbesondere konzipiert zur Ausübung auf anodisierten Aluminiumoberflächen, wobei unter Aluminium technische Aluminiumlegierungen zu verstehen sind, die zu mehr als 90 Gew.-% aus Aluminium bestehen. Beispiele hierfür sind die Legierungen AlMg1 und AlMgSi0,5. Unter "Dünnschicht-Anodisierung" wird eine Anodisierung der vorstehend näher beschriebenen Art verstanden, bei der Anodisierschichten mit einer Dicke von etwa 2 bis etwa 10 Mikrometer, insbesondere von 3 bis 8 um, beispielsweise von etwa 5 Mikrometer, erzeugt werden können.

Homo- oder Copolymerisate der unter a) genannten Art sind im Handel erhältlich, beispielsweise von der Firma Rohm & Haas. Vorzugsweise liegt die Konzentration eines solchen Polymers in der Behandlungslösung im Bereich zwischen 500 und 1 000 ppm. Dieses Polymer kann gemeinsam mit der Komponenten b) eingesetzt werden. Bei Verwendung einer Behandlungslösung, die ein Polymer aus der Gruppe a) enthält, ist es empfehlenswert, daß diese wäßrige Lösung zusätzlich Fluorwasserstoffsäure oder deren Anionen, vorzugsweise in Konzentrationen zwischen etwa 5 und etwa 50 ppm, enthält. Anstelle der Fluorwasserstoffsäure oder zusammen mit dieser kann die ein Polymer der Gruppe a) enthaltende Behandlungslösung zusätzlich die Komponente b), 200 bis 3 000 ppm Hexafluorotitansäure und/oder Hexafluorozirkonsäure oder jeweils deren Anionen enthalten. Vorzugsweise enthält eine derartige Lösung zwischen etwa 500 und etwa 1 500 ppm dieser komplexen Fluoride.

Der pH-Wert eines wäßrigen Behandlungslösung, die ein Polymer aus der Gruppe a), gegebenenfalls zusammen mit Fluorwasserstoffsäure und/oder einer Komponente der Gruppe b), liegt vorzugsweise im Bereich von 2 bis 5, insbesondere von 3 bis 4.

Die Komponente der Gruppe b) kann zusammen mit der Komponenten a) verwendet werden. Mit Vorteil kann die Komponente b) ohne die Komponenten a) Verwendung finden, wobei die wäßrige Lösung 200 bis 3 000 ppm, vorzugsweise 500 bis 1 500 ppm Hexafluorotitansäure und/oder Hexafluorozirkonsäure oder jeweils deren Anionen enthält. Der pH-Wert einer derartigen Behandlungslösung liegt vorzugsweise im Bereich von 3 bis 6, insbesondere von 4 bis 5. Demnach werden die Hexafluorosäuren entsprechend ihrer Säurekonstanten teilweise in unprotolysierter Form und teilweise in Form ihrer Anionen vorliegen. Das Anheben des pH-Wertes einer Lösung der freien Säuren auf den bevorzugten Bereich erfolgt durch Zugabe von Alkalimetallhydroxid-Lösungen oder vorzugsweise durch Zugabe von Ammoniak, von Ammoniumhydrogencarbonat und/oder von Aluminiumhydroxid, so daß die Hexafluorosäuren vorzugsweise in zumindest teilweise mit Ammoniak neutralisierter Form vorliegen.

Diese wäßrigen Behandlungslösungen bringt man mit den anodisierten Metalloberflächen vorzugsweise dadurch in Kontakt, daß man die Metallteile in die Behandlungslösungen eintaucht oder mit den Behandlungslösungen besprüht. Dabei ist es bevorzugt, daß die Behandlungslösung eine Temperatur im Bereich zwischen 25 und 55 °C aufweist, da bei darunterliegenden Temperaturen die Wirksamkeit einer derartigen Behandlung nachläßt und höhere Temperaturen keinen weiteren Vorteil bringen, die Energiekosten des Verfahrens jedoch unnötig erhöhen. Beispielsweise kann die Temperatur einer Behandlungslösung, die die Komponenten a) und/oder b) enthält, im Bereich zwischen 30 und 40 °C, beispielsweise bei 35 °C liegen. Die Behandlungslösungen läßt man auf die Metalloberflächen für eine Zeitdauer zwischen 30 und 300 Sekunden, insbesondere zwischen 60 und 180 Sekunden, beispielsweise für 120 Sekunden, einwirken.

Die Einwirkung der Behandlungslösung wird dadurch beendet, daß man die Behändlungslösung durch Besprühen der aus der Behandlungslösung entfernten Oberflächen mit Wasser verdünnt oder daß man die Behandlungslösung von den Oberflächen durch Abspritzen mit Wasser oder durch Eintauchen in Wasser abspült. Vorzugsweise wird für dieses Verdünnen oder Abspülen vollentsalztes Wasser verwendet. Ein Abspülen der Behandlungslösung durch Bespritzen mit Wasser oder durch Eintauchen in Wasser ist empfehlenswert, wenn die Behandlungslösung die Komponente b) enthält. Hat man mit einer Lösung behandelt, die die Komponente a) ohne Komponente b) enthält, so ist ein Besprühen der behandelten Oberflächen mit vollentsalztem Wasser, beispielsweise für eine Zeitdauer um 5 Sekunden, ausreichend.

Nach dem Besprühen mit Wasser oder dem Abspülen mit Wasser werden die behandelten Oberflächen zur Zeitersparnis vorzugsweise bei erhöhter Temperatur, beispielsweise bei einer Temperatur im Bereich zwischen 50 und 80 °C getrocknet. Dies kann auf bekannte Weise erfolgen, beispielsweise indem man die behandelten Metallteile mit Infrarotstrahlung bestrahlt, mit erhitzter Luft abbläst oder in einen entsprechend eingestellten Trockenofen einbringt.

Nach der Trocknung können die derart behandelten Metallteile mit einem Lack beschichtet werden, wozu man vorzugsweise einen Pulverlack verwendet. Beispiele hierfür sind im folgenden Beispielteil genannt.

Zur Zubereitung der vorstehend beschriebenen anwendungsfertigen Behandlungslösungen geht man vorzugsweise so vor, daß man Konzentrate verwendet, die vor Ort mit Wasser auf den erwünschten Konzentrationsbereich eingestellt werden. Dabei sollen die verwendeten Konzentrate in Form stabiler wäßriger Lösungen vorliegen, die nicht zur Bildung von Ausfällungen neigen. Die Konzentration der Wirkstoffe in diesen Konzentraten soll jedoch möglichst hoch sein, um nicht unnötige Wassermengen transportieren zu müssen. Zur Verwendung in dem vorstehend beschriebenen erfindungsgemäßen Verfahren sind Konzentrate geeignet und im Handel erhältlich, die durch Verdünnen mit Wasser auf eine Konzentration im Bereich zwischen etwa 0,2 und etwa 5 Vol.-% die anwendungsfertigen Behandlungslösungen liefern.

### Ausführungs- und Vergleichsbeispiele

Das Verfahren wurde an Blechen der Legierung AlMg1 und an Profilabschnitten der Legierung AlMgSi0,5 erprobt. Vor dem erfindungsgemäßen Behandlungsschritt wurden die Prüfkörper im Tauchen wie folgt vorbehandelt:
Entfetten: P3-almeco^{R} 20, 60 °C, 10 Minuten,
Spülen mit Wasser,
Beizen: P3-almeco^{R} 40, 55 °C, 10 Minuten,
Spülen mit Wasser,
Dekapieren: Salpetersäure (10 - 20 Gew.-%), Raumtemperatur, 1 Minute,
Spülen mit Wasser,
Dünnschicht-Anodisierung: Gleichstrom-Schwefelsäure-Verfahren: 180 g/l Schwefelsäure, 5 g/l Al(III), 25 °C, 2 A/dm², 5 Minuten: Schichtdicke 5 Mikrometer,
Spülen mit Wasser,
Spülen mit vollentsalztem Wasser auf eine Leitfähigkeit <10 µS/cm.

Danach erfolgte die Lackhaftungs-verbessernde Nachbehandlung gemäß Tabelle 1. Zur Bereitung der Behandlungslösungen wurden Konzentrate A, B und C hergestellt und auf die in der Tabelle 1 angegebenen Konzentrationen mit vollentsalztem Wasser verdünnt. Die Behandlung erfolgte durch Eintauchen der Prüfkörper in die Behandlungslösungen bei den angegebenen Temperaturen für eine Zeit von 2 Minuten. Prüfkörper, die unter alleiniger Verwendung von Konzentrat A behandelt wurden, wurden nach Ende des Eintauchens mit vollentsalztem Wasser für 5 Sekunden besprüht. Die anderen Prüfkörper wurden nach der Behandlung zunächst mit Stadtwasser und anschließend mit vollentsalztem Wasser gespült. In allen Fällen wurden die Prüfkörper in einem Umlufttrockenschrank bei 65 °C für 30 Minuten getrocknet. Danach wurden die Prüfkörper mit 2 unterschiedlichen Pulverlacken beschichtet:
Pulverlack 1: Polyester AKZO 34-9016 NE 83 weiß, Einbrenntemperatur 180 °C, Einbrenndauer 12 Minuten;
Pulverlack 2: Polyester Tiger, Drylack 19/40250, blau, RAL 5014, glänzend, Einbrenntemperatur 190 °C, Einbrenndauer 14 Minuten.

Zur Haftungsprüfung wurden die Prüfteile für eine Dauer von 6 Stunden in siedendes vollentsalztes Wasser gelegt. Dabei wurden nach Ende der Prüfung die Lackhaftung auf der Fläche nach DIN 53 209 und die Lackunterwanderung nach Abkratzen an einem Ritz nach DIN 53 167 beurteilt. Die Ergebnisse sind in Tabelle 2 für das Substrat AlMg1 und in Tabelle 3 für das Substrat AlMgSi0,5 enthalten.

Die für den Ansatz der Behandlungslösungen verwendeten Konzentrate hatten folgende Zusammensetzung:

| Konzentrat A | |
|---|---|
| 5 | Gew.-% Polyacrylsäure (Primal^{R} A1, Rohm & Haas) |
| 0,07 | Gew.-% HF |
| 94,93 | Gew.-% Wasser |

| Konzentrat B | |
|---|---|
| 8,5 | Gew.-% Hexafluorotitansäure |
| 0,4 | Gew.-% NH₃ |
| 91,1 | Gew.-% Wasser |

| Konzentrat C | |
|---|---|
| 8,5 | Gew.-% Hexafluorozirkonsäure |
| 0,4 | Gew.-% NH₃ |
| 91,1 | Gew.-% Wasser |

**Tabelle 1**

| Behandlungsbäder und Verfahrensparameter | | | |
|---|---|---|---|
| Versuch Nr. | Konzentrat (Verdünnung) | Temperatur °C | pH nach Verdünnung |
| Vergl. 1 | ohne Nachbehandlung | | |
| | | | |
| Beisp. 1 | A (1,5 Vol.-%) | 35 | 3,5 |
| | | | |
| Beisp. 2 | B (1,0 Vol.-%) | 35 | 4,5^{*)} |
| | | | |
| Beisp. 3 | C (1,0 Vol.-%) | 35 | 4,5^{*)} |
| | | | |
| Beisp. 4 | A (1 Vol.-%) + B (1 Vol.-%) | 35 | 4,0^{*)} |
| | | | |
| Beisp. 5 | A (1 Vol.-%) + C (1 Vol.-%) | 35 | 4,0^{*)} |
| | | | |
| Beisp. 6 | B (0,5 Vol.-%) + C (0,5 Vol.-%) | 35 | 4,5^{*)} |

| | | | |
|---|---|---|---|
| *) pH-Wert mit Ammoniumhydrogencarbonat eingestellt | | | |

**Tabelle 2**

| Versuchsergebnisse auf Legierung AlMg1 | | | | |
|---|---|---|---|---|
| Versuch Nr. | Pulverlack | Lackdicke (µ) | Fläche nach Kochtest (gemäß DIN 53 209) | Ritz nach Kochtest (mm Unterwanderung, gemäß DIN 53 167) |
| Vergl.1 | 1 | 84 | m0/g0 | 2,0 |
| | 2 | 74 | m0/g0 | 1,5 |
| | | | | |
| Beisp.1 | 1 | 70 | m0/g0 | 0 |
| | 2 | 82 | m0/g0 | 0 |
| | | | | |
| Beisp.2 | 1 | 84 | m0/g0 | 0 |
| | 2 | 111 | m0/g0 | 0 |
| | | | | |
| Beisp.3 | 1 | 80 | m0/g0 | 0 |
| | 2 | 85 | m0/g0 | 0 |
| | | | | |
| Beisp.4 | 1 | 70 | m0/g0 | 0 |
| | 2 | 78 | m0/g0 | 0 |
| | | | | |
| Beisp.5 | 1 | 85 | m0/g0 | 0 |
| | 2 | 93 | | |
| | | | | |
| Beisp.6 | 1 | 72 | m0/g0 | 0 |
| | 2 | 69 | m0/g0 | 0 |

**Tabelle 3**

| Versuchsergebnisse auf Legierung AlMgSi 0,5 | | | | |
|---|---|---|---|---|
| Versuch Nr. | Pulverlack | Lackdicke (µ) | Fläche nach Kochtest (gemäß DIN 53 209) | Ritz nach Kochtest (mm Unterwanderung, gemäß DIN 53 167) |
| Vergl.1 | 1 | 82 | m0/g0 | keine Haftung |
| | 2 | 99 | m0/g0 | keine Haftung |
| | | | | |
| Beisp.1 | 1 | 87 | m0/g0 | 0 |
| | 2 | 93 | m0/g0 | 0 |
| | | | | |
| Beisp.2 | 1 | 59 | m0/g0 | 0 |
| | 2 | 90 | m0/g0 | 0 |
| | | | | |
| Beisp.3 | 1 | 88 | m0/g0 | 0 |
| | 2 | 67 | m0/g0 | 0 |
| | | | | |
| Beisp.4 | 1 | 86 | m0/g0 | 0 |
| | 2 | 74 | m0/g0 | 0 |
| | | | | |
| Beisp.5 | 1 | 62 | m0/g0 | 0 |
| | 2 | 79 | m0/g0 | 0 |
| | | | | |
| Beisp.6 | 1 | 91 | m0/g0 | 0 |
| | 2 | 83 | m0/g0 | 0 |

## Patentansprüche

1. Verwendung einer wäßrigen Lösung, enthaltend eine oder mehrere der folgenden Komponenten:
a) 200 bis 2000 ppm eines Homo- oder Copolymerisats von Acrylsäure und/ oder Methacrylsäure und/oder jeweils deren Ester mit einer mittleren Molmasse im Bereich zwischen 20 000 und 150 000
und/oder
b) 200 bis 3000 ppm Hexafluorotitansäure und/oder Hexafluorozirkonsäure oder jeweils deren Anionen,
zur Verbesserung der Lackhaftung einer anodisierten Metalloberfläche nach einer vorausgegangenen Dünnschicht-Anodisierung, wobei man die Lösung mit der anodisierten Metalloberfläche in Kontakt bringt.

2. Verwendung nach Anspruch 1, dadurch gekennzeichnet, daß die wäßrige Lösung die Komponente a) in Mengen von 200 bis 2000 ppm enthält.

3. Verwendung nach Anspruch 2, dadurch gekennzeichnet, daß die wäßrige Lösung zusätzlich 5 bis 50 ppm Fluorwasserstoffsäure oder deren Anionen enthält.

4. Verwendung nach einem oder beiden der Ansprüche 2 und 3, dadurch gekennzeichnet, daß die wäßrige Lösung 200 bis 3000 ppm Hexafluorotitansäure und/oder Hexafluorozirkonsäure oder jeweils deren Anionen enthält.

5. Verwendung nach Anspruch 1, dadurch gekennzeichnet, daß die wäßrige Lösung 200 bis 3000 ppm Hexafluorotitansäure und/oder Hexafluorozirkonsäure oder jeweils deren Anionen enthält und frei ist von der Komponenten a).

6. Verwendung nach einen oder mehreren der Ansprüche 1, 4 oder 5, dadurch gekennzeichnet, daß die Hexafluorosäuren teilweise mit Ammoniak neutralisiert sind.

7. Verwendung nach einem oder mehreren der Ansprüche 1 bis 6, dadurch gekennzeichnet, daß die wäßrige Lösung eine Temperatur im Bereich zwischen 25 und 55 °C aufweist und man die Lösung auf die einer Dünnschicht-Anodisierung unterzogenen Metalloberflächen für eine Zeitdauer zwischen 30 und 300 Sekunden einwirken läßt.

8. Verwendung nach Anspruch 7, dadurch gekennzeichnet, daß man die Metalloberflächen nach Ende der Einwirkungsdauer mit Wasser besprüht oder spült und bei einer Temperatur im Bereich zwischen 50 und 80 °C trocknet.

9. Verwendung nach einem oder mehreren der Ansprüche 1 bis 8, dadurch gekennzeichnet, daß die Dünnschicht-Anodisierung unter folgenden Bedingungen erfolgt:
| | |
|---|---|
| Elektrolytkonzentration | 180 - 200 g/l H₂SO₄ |
| max. Al-Gehalt | 15 g/l |
| Chloridgehalt | < 0,1 g/l |
| Temperatur | 25 - 30 °C |
| Stromdichte | 1,5 - 3 A/dm² |
| Schichtdicke | 3 - 8 µm. |

## Claims

1. The use of an aqueous solution containing one or more of the following components:
a) 200 to 2,000 ppm of a homopolymer or copolymer of acrylic acid and/or methacrylic acid and/or esters thereof with an average molecular weight of 20,000 to 150,000
and/or
b) 200 to 3,000 ppm of hexafluorotitanic acid and/or hexafluorozirconic acid or anions thereof,
for improving the paint adhesion of an anodized metal surface after thin-layer anodization, the solution being contacted with the anodized metal surface.

2. The use claimed in claim 1, characterized in that the aqueous solution contains component a) in quantities of 200 to 2,000 ppm.

3. The use claimed in claim 2, characterized in that the aqueous solution additionally contains 5 to 50 ppm of hydrofluoric acid or anions thereof.

4. The use claimed in one or both of claims 2 and 3, characterized in that the aqueous solution contains 200 to 3,000 ppm of hexafluorotitanic acid and/or hexafluorozirconic acid or anions thereof.

5. The use claimed in claim 1, characterized in that the aqueous solution contains 200 to 3,000 ppm of hexafluorotitanic acid and/or hexafluorozirconic acid or anions thereof and is free from component a).

6. The use claimed in one or more of claims 1, 4 or 5, characterized in that the hexafluoro acids are partly neutralized with ammonia.

7. The use claimed in one or more of claims 1 to 6, characterized in that the aqueous solution has a temperature of 25 to 55°C and the solution is allowed to act on the thin-layer-anodized metal surfaces for between 30 and 300 seconds.

8. The use claimed in claim 7, characterized in that, after the treatment, the metal surfaces are sprayed or rinsed with water and dried at a temperature of 50 to 80°C.

9. The use claimed in one or more of claims 1 to 8, characterized in that the thin-layer anodization is carried out under the following conditions:
| | |
|---|---|
| electrolyte concentration | 180 - 200 g/l H₂SO₄ |
| max. Al content | 15 g/l |
| chloride content | <0.1 g/l |
| temperature | 25 - 30°C |
| current density | 1.5 - 3 A/dm² |
| layer thickness | 3 - 8 µm. |

## Revendications

1. Utilisation d'une solution aqueuse contenant un ou plusieurs des composants suivants :
a) 200 à 2000 ppm d'un homo- ou copolymérisat d'acide acrylique et/ou d'acide méthacrylique et/ou de l'ester correspondant ayant une masse moléculaire moyenne comprise entre 20 000 et 150 000 ; et/ou
b) 200 à 3000 ppm d'acide hexafluorotitanique et/ou d'acide hexafluorozirconique ou de leurs anions correspondants,
pour améliorer l'adhérence du vernis à une surface métallique anodisée après une anodisation en couche mince préalable, où l'on met en contact la solution avec la surface de métal anodisée.

2. Utilisation selon la revendication 1,
caractérisée en ce que
la solution aqueuse contient les composants a) à des quantités de 200 à 2000 ppm.

3. Utilisation selon la revendication 2,
caractérisée en ce que
la solution aqueuse contient en outre de 5 à 50 ppm d'acide fluorhydrique ou de ses anions.

4. Utilisation selon une ou plusieurs des revendications 2 et 3,
caractérisée en ce que
la solution aqueuse contient de 200 à 3000 ppm d'acide hexafluorotitanique et/ou d'acide hexafluorozirconique ou respectivement de leurs anions.

5. Utilisation selon la revendication 1,
caractérisée en ce que
la solution aqueuse contient de 200 à 3000 ppm d'acide hexafluorotitanique et/ou d'acide hexafluorozirconique et/ou respectivement de leurs anions et est dépourvue de composant a).

6. Utilisation selon une ou plusieurs des revendications 1, 4 ou 5,
caractérisée en ce que
les acides hexafluorés sont partiellement neutralisés avec de l'ammoniac.

7. Utilisation selon une ou plusieurs des revendications 1 à 6,
caractérisée en ce que
la solution aqueuse présente une température comprise dans un intervalle de 25 à 55°C et en ce qu'on fait agir la solution sur une surface de métal soumise à une anodisation en couche mince pendant une durée comprise entre 30 et 300 secondes.

8. Utilisation selon la revendication 7,
caractérisée en ce qu'
on arrose d'eau les surfaces métalliques et en ce qu'on les sèche à une température comprise entre 50 et 80°C.

9. Utilisation selon une ou plusieurs des revendications 1 à 8,
caractérisée en ce que
l'anodisation en couche mince s'effectue dans les conditions suivantes :
| | |
|---|---|
| Concentration d'électrolyte : | 180-200 g/l d'H₂SO₄ |
| Teneur maximale en Al : | 15 g/l |
| Teneur en chlorure | < 0,1 g/l |
| Température | 25-30°C |
| Densité de courant linéaire | 1,5 - 3 A/dm² |
| Epaisseur de la couche | 3 - 8 µm. |
